# EUROPÄISCHE PATENTSCHRIFT

(11) **EP 3 483 091 B1**
(45) Veröffentlichungstag und Bekanntmachung des Hinweises auf die Patenterteilung: **22.03.2023**
(21) Anmeldenummer: 18215400.5
(22) Anmeldetag: 09.02.2018
(51) Int. Cl.: B65F 1/14, B65F 3/00, B60P 3/42

(54) **VERFAHREN ZUR IDENTIFIZIERUNG EINER ABFALLMENGE**
METHOD FOR IDENTIFYING A QUANTITY OF WASTE
PROCÉDÉ D'IDENTIFICATION D'UNE QUANTITÉ DE DÉCHETS

(30) Priorität: 13.02.2017 DE 102017001385
(43) Veröffentlichungstag der Anmeldung: 15.05.2019
(62) Teilanmeldung aus: 18155982.4
(73) Patentinhaber: FAUN Umwelttechnik GmbH & Co. KG, 27711 Osterholz-Scharmbeck (DE)
(72) Erfinder: Kirchhoff, Dr. Johannes F., 58636 Iserlohn (DE); Hermanspann, Patrick, 28790 Schwanewede (DE); Helfmeier, Ulrich, 28759 Bremen (DE); Sandkühler, Georg, 27711 Osterholz-Scharmbeck (DE)
(74) Vertreter: Laufhütte, Dieter

(56) Entgegenhaltungen:
- EP-A1- 2 732 961
- WO-A1-2010/112669
- AT-B- 394 839
- AU-A- 4 808 196
- DE-A1- 10 101 865
- DE-A1- 19 730 684
- DE-A1- 19 802 415
- DE-A1-102014 114 011
- DE-C2- 3 543 102

## Beschreibung

Die Erfindung betrifft ein Verfahren zur Identifizierung einer Abfallmenge gemäß dem Oberbegriff des Patentanspruchs 1. Weiterhin wird ein Transportfahrzeug zum Transportieren von Abfallmengen in Vakuumverpackungen beschrieben. Ein Verfahren gemäß dem Oberbegriff des Patentanspruchs 1 ist aus der DE 198 02 415 A1 bekannt.

Aus dem Stand der Technik sind Transportfahrzeuge bekannt, die beispielsweise zum Ausliefern von Postsendungen genutzt werden. Derartige Fahrzeuge werden beispielsweise von Paketdiensten genutzt und befahren täglich oder nahezu täglich einen großen Bereich des Straßennetzes. Aus dem Stand der Technik sind auch Abfallsammelfahrzeuge bekannt, die in Intervallen und in der Regel seltener als die vorgenannten Kleintransporter der Paketdienste ebenfalls einen großen Teil des Straßennetzes befahren und dabei bereitgestellte Abfälle einsammeln bzw. abtransportieren.

Kleintransporter der Paketdienste beginnen ihre Auslieferung in einem mit Paketen bzw. Postsendungen beladenen Zustand und beenden sie in einem entleerten oder weitgehend entleerten Zustand. Dagegen beginnen Abfallsammelfahrzeuge ihrer Abfallsammelrunden in einem leeren Zustand und kehren gefüllt nach Beendigung der Abfallsammelrunde z.B. zu einer Deponie zurück. Damit bestehen in beiden Fällen ungenutzte Ladekapazitäten zu unterschiedlichen Zeitpunkten der Arbeitseinsätze der Transportfahrzeuge. Denn aufgrund der gegenwärtigen unhygienischen Zustände beim Einsammeln von Abfällen ist es derzeit nur schlecht möglich, das größer werdende freie Transportvolumen eines Transporter zum Transportieren von Postsendungen im Lauf einer Zustellrunde mit Abfällen zu füllen. Auch besteht aufgrund der unregelmäßigen Zustellfahrten der Paketdienste das Problem, dass ein Nutzer nicht weiß, wann er Abfälle zur Mitnahme durch einen Paketzusteller beispielsweise an die Straße stellen kann und umgekehrt ein Paketzusteller nicht weiß, wo und wann Abfälle zur Abholung bereitgestellt worden sind.

Vor diesem Hintergrund ist es Aufgabe der Erfindung, ein verbessertes Verfahren zur Identifizierung von Abfällen bereitzustellen, mittels der die oben genannte Schwierigkeit überwunden wird und das gleichzeitige Einsammeln und Zustellen von Postsendungen ermöglicht wird.

Es ist ein Transportfahrzeug vorgesehen, welches insbesondere als Abfallsammelfahrzeug und/oder als Kleintransporter ausgebildet ist, das wenigstens zwei getrennte und miteinander gekoppelte Lagerkammern umfasst, wobei die zwei Lagerkammern mittels einer gemeinsamen, verschieblichen Trennwand voneinander getrennt sind.

Das Volumenverhältnis der Lagerkammern zueinander kann durch das Verschieben der Trennwand verändert werden. Die Lagerkammern sind dabei in dem Sinne miteinander gekoppelt, dass das Vergrößern des Volumens einer Lagerkammer durch Verschieben der Trennwand das Verringern des Volumens der anderen Lagerkammer bedingt und umgekehrt. Durch die beiden getrennten und veränderlichen Lagerkammern ist es vorteilhafterweise möglich, eine Kammer zum Lagern von Postsendungen und die andere zum Lagern von Abfällen zu nutzen. Während im Laufe einer Zustellfahrt des Transportfahrzeugs die Kammer mit den Postsendungen geleert und verkleinert wird, kann so gleichzeitig oder annähernd gleichzeitig die andere Kammer vergrößert und mit Abfällen gefüllt werden. Durch die Trennwand ist sichergestellt, dass ein Kontakt zwischen den unterschiedlichen Inhalten verhindert wird und so hygienische Voraussetzungen erfüllt werden. Das Transportfahrzeug kann somit als kombiniertes Abfallsammel- und Paketzustellfahrzeug fungieren.

In einer vorteilhaften Ausführung ist denkbar, dass die Trennwand in Längsrichtung und/oder in Querrichtung des Transportfahrzeugs verschieblich ist und/oder dass die Trennwand senkrecht zur Längsrichtung des Transportfahrzeugs angeordnet ist und/oder dass die Trennwand in Führungsnuten verschieblich gelagert ist und/oder dass die Trennwand über mehr als 70% insbesondere, insbesondere mehr als 80% und weiter insbesondere mehr als 90% der summierten Länge der Lagerkammern verschieblich ist. Die Verschieblichkeit der Trennwand über die gesamte oder nahezu gesamte Länge der Lagerkammern ermöglicht es vorteilhafterweise zu Beginn einer Zustellfahrt des Transportfahrzeugs den gesamten oder nahezu den gesamten Lagerbereich einer Lagerkammer für die Postsendungen zu nutzen, während die andere Lagerkammer, d.h. die Lagerkammer für Abfälle, möglichst klein gehalten werden kann.

In einer weiteren bevorzugten Ausführung ist denkbar, dass entlang wenigstens einer Innenwand wenigstens einer Lagerkammer wenigstens eine Planenbahn geführt ist, die insbesondere mit der Trennwand gekoppelt ist. Die Planenbahn kann hierbei zur Trennung des in der Lagerkammer gelagerten Lagerguts von außerhalb der Planenbahn befindlichen Strukturen des Transportfahrzeuges dienen. Bei den außerhalb befindlichen Strukturen kann es sich beispielsweise um feste Wandungen des Transportfahrzeugs handeln. Durch eine derartige Planenbahn kann sichergestellt werden, dass ein ungewünschter Kontakt der Postsendungen mit möglicherweise mit Abfall kontaminierten Wandungen verhindert wird.

In einer weiteren bevorzugten Ausführung ist denkbar, dass im Bereich einer hinteren Lagerkammer wenigstens eine Einwurföffnung und/oder dass im Bereich einer vorderen Lagerkammer eine Durchgangsöffnung zum Fahrerhaus des Transportfahrzeuges vorgesehen ist und/oder dass insbesondere zumindest an der Bordsteinseite des Fahrerhauses eine automatisch öffnende Schiebetür vorgesehen ist und/oder dass ein insbesondere mit Vakuumgreifern ausgerüsteter Greifer oder Greifroboter vorgesehen ist und/oder dass eine Einlesevorrichtung zum Einlesen einer mit einem Marker identifizierten Abfallmenge vorgesehen ist.

Der Greifer oder Greifroboter kann dazu ausgebildet sein, Abfälle durch die Einwurföffnung in die hintere Lagerkammer automatisch oder ferngesteuert zu befördern. Durch die Durchgangsöffnung ist es einer Bedienperson des Transportfahrzeugs möglich, vom Fahrerhaus direkt in die vordere Lagerkammer einzusteigen und beispielsweise Postsendungen aufzunehmen oder abzulegen. Die automatisch öffnende Schiebetür erleichtert es der Bedienperson das Fahrerhaus beispielsweise zum Zustellen von Postsendungen zu verlassen. Mittels der Einlesevorrichtung ist es besonders einfach möglich, von dem Transportfahrzeug aufgenommene Abfälle zu identifizieren und gegebenenfalls zu verwalten.

In einer besonders bevorzugten Ausführung ist denkbar, dass der Greifer oder Greifroboter am Fahrzeug und/oder im Fahrzeug, insbesondere am Fahrzeugdach oder an einer Fahrzeugwand, beweglich und/oder verfahrbar angeordnet ist. Damit kann der Greifer bzw. Greifroboter zum Bewegen von innerhalb und/oder außerhalb des Fahrzeugs positionierten Objekten genutzt werden. Denkbar ist beispielsweise, dass der Greifer bzw. Greifroboter Postsendungen von außerhalb des Fahrzeugs greifen und innerhalb des Fahrzeugs in einer gewünschten Position bzw. Reihenfolge einlagern kann. Umgekehrt kann der Greifer bzw. Greifroboter bei der Zustellung entsprechender Postsendungen diese aus dem Fahrzeug herausreichen und der Bedienperson übergeben. Damit muss die Bedienperson nicht mehr in die Lagerkammer hineingehen und manuell die gewünschte Postsendung auswählen bzw. suchen. Denkbar ist auch, dass derselbe Greifer bzw. Greifroboter Abfälle von außerhalb des Fahrzeuges in dieses hineinbefördern kann.

Die Erfindung stellt ein Verfahren gemäß dem Patentanspruch 1, zum Identifizieren einer Abfallmenge mit einem Marker bereit, wobei das Verfahren die Schritte umfasst
- Bereitstellen einer Mehrzahl von insbesondere identischen Markern mit damit verknüpften Informationen;
- Eingeben der Informationen in ein EDV-System durch einen ersten Nutzer; und
- Markieren der Abfallmenge mit wenigstens einem der Marker.

Durch die Verwendung einer Mehrzahl von identischen Markern ist es vorteilhafterweise einfach möglich eine Abfallmenge und auch weitere Abfallmengen möglichst mit geringem Aufwand eindeutig zu identifizieren. Der Begriff der Abfallmenge kann hierbei beispielsweise eine in einem Abfallbeutel gesammelte Abfallmenge bezeichnen, die zur gemeinsamen Entsorgung vorgesehen ist. Der Nutzer muss zur Identifizierung der Abfallmenge die auf dem Marker hinterlegten Informationen nur einmal in ein EDV-System eingeben. Dann können alle Marker, denen dieselbe Information zugeordnet ist zur Identifizierung von Abfall verwendet werden. Lediglich wenn die Mehrzahl an Markern mit gleichen Informationen aufgebraucht ist, ist es erforderlich, vor der Nutzung von anderen Marken bzw. von mit anderen Informationen verknüpften Markern diese erneut in das EDV-System einzugeben. Die Marker können beispielsweise QR-Codes oder Ähnliches umfassen, mittels der die entsprechenden Informationen wie beispielsweise eine laufende Nummer oder Identnummer abgespeichert sind. Jeder Marker der genannten Mehrzahl von Markern kann dabei mit derselben Information verknüpft sein.

Die Marker können an Vakuumverpackungen zum Aufnehmen der Abfallmengen vorgesehen sein. Das Markieren der Abfallmenge kann dabei durch das Einfüllen der Abfallmenge in die entsprechend markierte Vakuumverpackung erfolgen.

Es ist vorgesehen, dass das Verfahren das Veranlassen eine Handhabung des markierten Abfalls umfasst. Demnach kann beispielsweise beim Markieren der Abfallmenge eine Information in das EDV-System eingegeben oder von diesem übermittelt werden, die einen Abfallentsorger über den Ort, die Zeit und ähnliche Parameter einer durchzuführenden Abfallentsorgung unterrichtet. Der Abfallentsorger weiß demnach, dass an einer bestimmten Adresse eine Abfallmenge angefallen ist und kann Vorkehrungen treffen, diese Abfallmenge abzutransportieren.

In einer weiteren bevorzugten Ausführung ist denkbar, dass die mit dem Marker verknüpften Informationen ein zweites Mal durch insbesondere einen anderen Nutzer in das EDV-System eingegeben wird. Bei dem zweiten Nutzer kann es sich um die Bedienperson eines Abfallsammelfahrzeugs handeln, die beim Abholen des Abfalls den Marker bzw. die damit verknüpften Informationen beispielsweise einscannt oder anderweitig in das EDV-System eingibt und damit beispielsweise die korrekte Abholung des Abfalls bestätigt. Der Begriff des EDV-Systems ist vorliegend weit auszulegen und kann jedwedes System umfassen, auf das beispielsweise ein Abfallentsorger, eine Bedienperson eines Abfallsammelfahrzeugs und/oder eine den Abfall generierende bzw. markierende Person zugreifen kann.

In einer weiteren bevorzugten Ausführung ist denkbar, dass das Verfahren das Veranlassen eines die Abfallmenge betreffenden Verwaltungsschrittes umfasst. Dabei kann beispielsweise erfasst werden, dass Abfall entsorgt bzw. transportiert worden ist und hierbei ein entsprechender Marker verwendet worden ist. Der Verwaltungsschritt kann ferner darin bestehen, eine automatisierte Bestellung entsprechender Marker durchzuführen, wobei das EDV-System automatisch nachverfolgen kann, wie viele Marker von einem Nutzer bereits verbraucht worden sind und ob ggf. Marker zur Neige gehen und nachbestellt werden sollten. Der Verwaltungsschritt kann das Nachbestellen und Liefern entsprechender Marker umfassen, wobei selbstverständlich die verfahrensgemäß Identifizierte Abfallmenge berücksichtigt wird.

Das Verfahren kann ferner das Wiederholen wenigstens einen der genannten Schritte nach Verbrauch eines oder einer Mehrzahl der Marker umfassen. Das Verbrauchen der Marker umfasst vorliegend das Markieren einer Abfallmenge mit einem Marker, wobei es denkbar ist, dass der Marker auf die Abfallmenge aufgeklebt wird oder anderweitig mit ihr verknüpft ist. Das Verbrauchen der Marker kann ferner auch eine weitere Eingabe der mit dem Marker verknüpften Informationen in das EDV-System umfassen.

Es wird ferner eine Vakuumverpackung für Abfall beschrieben, wobei die Vakuumverpackung wenigstens einen Marker umfasst, der mit wenigstens einer Information verknüpft ist. Das Verpackungsmaterial kann besonders widerstandsfähig sein, so dass die Verpackung während eines Vakuumierungsvorgangs nicht einfach beschädigt werden kann und das erzeugte Vakuum möglichst lange aufrechterhalten werden kann.

In einer bevorzugten Ausführung ist denkbar, dass die Vakuumverpackung innerhalb eines Gebindes mit einer Mehrzahl an Vakuumverpackungen vorgesehen ist und alle in dem Gebinde vorgesehenen Vakuumverpackungen Marker mit denselben Informationen umfassen. Bei Nutzung der Verpackungen genügt es somit einmalig die mit den Markern verknüpften Informationen in das EDV-System einzugeben um fortan beispielsweise ein automatisches Nachbestellen weiterer Verpackungen zu veranlassen.

In einer besonders bevorzugten Ausführung ist denkbar, dass eine Gebindeverpackung des Gebindes selbst einen Marker umfasst und in einer weiteren bevorzugten Ausführung ist denkbar, dass der Marker je wenigstens einen QR-Code und/oder einen NFC-Tag und/oder einen RFID-Tag umfasst. Die mit dem Marker verknüpften Informationen können entsprechend auf dem jeweiligen Speichermedium hinterlegt sein.

Weitere Einzelheiten und Vorteile sind anhand des in den Figuren gezeigten Ausführungsbeispiels erläutert. Dabei zeigen:

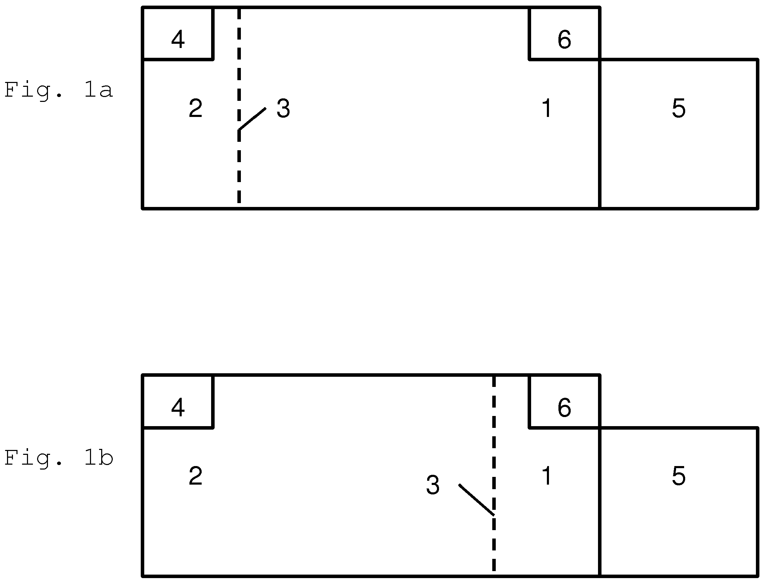

- Figur 1a:: Transportfahrzeug mit hinten positionierter Trennwand; und
- Figur 1b:: Transportfahrzeug mit vorne positionierter Trennwand.

Die Figuren 1a und 1b zeigt eine schematische Ansicht eines Transportfahrzeugs, welches als kombiniertes Abfallsammelfahrzeug und Postzustellfahrzeug bzw. Kleintransporter ausgebildet ist. Der Laderaum des Transportfahrzeugs ist in zwei getrennte und miteinander gekoppelte Lagerkammer 1, 2 unterteilt. Die Trennung kann dabei quer zur Längsachse des Transportfahrzeugs erfolgen, sodass eine vordere Lagerkammer 1 und eine hintere Lagerkammer 2 bereitgestellt sein kann. Zwischen den Lagerkammern 1, 2 ist eine gemeinsame, verschieblich angeordnete Trennwand 3 vorgesehen.

Die Figur 1a zeigt ein Transportfahrzeug, bei dem die Trennwand 3 in einem hinteren Bereich positioniert ist, sodass die vordere Lagerkammer 1 eine größere Fläche bzw. ein größeres Volumen aufweist als die hintere Lagerkammer 2. In der Figur 1b ist ein davon unterschiedlicher Zustand des Transportfahrzeugs gezeigt, bei dem die Trennwand 3 weiter vorne in Längsrichtung des Transportfahrzeugs angeordnet ist und die vordere Lagerkammer 1 ein geringeres Volumen aufweist als die hintere Lagerkammer 2. Das Volumenverhältnis der beiden Lagerkammer 1, 2 ist demnach durch das Verschieben der Trennwand 3 veränderbar.

Zum Verändern des Volumenverhältnisses kann die Trennwand 3 in Längsrichtung und/oder in Querrichtung des Transportfahrzeugs verschieblich gelagert sein. Hierzu kann die Trennwand 3 beispielsweise in entsprechenden Führungsnoten verschieblich gelagert sein. Die Trennwand 3 kann ferner senkrecht zur Längsrichtung des Transportfahrzeugs angeordnet sein und über mehr als 70% insbesondere mehr als 80% und besonders bevorzugt über mehr als 90% der summierten Länge der Lagerkammern 1, 2 verschieblich sein.

Entlang wenigstens einer Innenwand des Transportfahrzeugs bzw. wenigstens einer Lagerkammer 1, 2 kann wenigstens eine Planenbahn geführt sein, die insbesondere mit der Trennwand 3 gekoppelt sein kann. Die Innenwand der entsprechenden Lagerkammer 1, 2 kann so mittels der Planenbahn vor direktem Kontakt mit dem darin gelagerten Inhalt wie beispielsweise dem Abfall geschützt werden.

Im Bereich beispielsweise der hinteren Lagerkammer 2 kann wenigstens eine Einwurföffnung 4 zum Einwerfen von Abfall vorgesehen sein. Eine Einwurföffnung 4 kann alternativ oder zusätzlich im Bereich der vorderen Lagerkammer 1 vorgesehen sein. Zwischen der vorderen Lagerkammer 1 und dem Fahrerhaus 5 kann eine Durchgangsöffnung vorgesehen sein, durch die der Fahrer des Transportfahrzeugs vom Fahrerhaus 5 in die vordere Lagerkammer 1 gelangen kann und dort beispielsweise Postsendungen oder Ähnliches aufnehmen kann. Ferner kann am Transportfahrzeug ein Greifer 6 oder ein Greifroboter 6 vorgesehen sein, der beispielsweise einen Vakuumgreifer umfassen kann und relativ zum Transportfahrzeug beweglich angeordnet sein kann. Mittels des Greifers 6 bzw. Greifroboters 6 ist es möglich, Objekte aus dem Fahrzeug bzw. innerhalb des Fahrzeugs zu bewegen und beispielsweise Abfälle von außerhalb des Fahrzeugs in das Fahrzeug zu befördern.

Die Abfälle können dabei manuell oder automatisch mittels einer Einlesevorrichtung identifiziert werden. Hierzu können die Abfälle mittels des erfindungsgemäßen Verfahrens und mit Hilfe entsprechender Marker entsprechend identifiziert sein. Während des Einladens des Abfalls oder auch kurz davor oder auch kurz danach kann mittels der Einlesevorrichtung die eingefüllte Abfallmenge identifiziert werden und die entsprechenden eingelesenen Daten bzw. Informationen einem EDV-System zur weiteren Bearbeitung des Abfallsammelvorgangs zur Verfügung gestellt werden.

Der Transportkasten des Fahrzeugs, der die Lagerkammern 1, 2 umfasst, kann aus einem selbsttragenden Gerippe besteht, dessen seitliche Längsprofile oben und unten symmetrische Führungsnuten enthalten, wie sie in ähnlicher Form für Curtainsider-Auflieger verwendet werden.

In diesen Führungsnuten kann die Trennwand 3 geführt sein, die über nahezu die gesamte Länge der Profile (abzüglich kleiner Anteile für Antriebe) in Fahrtrichtung vor und zurück verschieblich ist.

Ebenfalls in diesen Nuten können starke Planenbahnen geführt sein, die am vorderen und hinteren Ende des Kastens bzw. des Transportkastens aufrollbar angebunden und mit ihrem freien Ende an der verschiebbaren Trennwand 3 befestigt sein können. Zusätzlich können vorne und hinten symmetrische Abschlussrahmen mit den antreibbaren Rollen für die Planen vorgesehen sein. Auch der Boden des Transportkastens bzw. wenigstens einer der Lagerkammern 1, 2 kann aus einer derartigen Plane bestehen.

Der hintere Bereich des Rahmen bzw. des Transportkastens kann eine nach oben öffnende Abschlusstür mit in Schulterhöhe angeordneter Einwurföffnung umfassen, die zum Einfüllen der Abfallpakete bzw. der Abfallmengen dient. Diese Öffnung könnte mit einer Einwurfschleuse versehen sein, wie sie aus Container für die Altkleidersammlung bekannt ist. Der vordere Rahmen ist mit einer großzügigen Öffnung an das Fahrerhaus angebunden.

Um das Volumen der Lagerkammern 1, 2 zu verstellen, werden die entsprechenden Planen auf Zug gebracht und eingerollt, während die an der anderen Seite der Trennwand 3 angebrachten Bahnen gegen eine leichte Vorspannung abgerollt werden.

Das Fahrerhaus kann so ausgeführt sein, dass auf der Bordsteinseite eine automatisch öffnende Schiebetür vorhanden ist, während auf der anderen Seite ein Fahrerplatz vorgesehen sein kann, der möglichst komfortabel eingerichtet ist und die Möglichkeit bietet, bequem zur Bordsteinseite hin aus- bzw. einzusteigen.

Auf der Bordsteinseite kann zusätzlich die Möglichkeit bestehen, einen mit Vakuumgreifern ausgerüsteten Greifroboter unter dem Dach oder im Bereich des Dachs oder an einer Wandung des Fahrzeugs zu montieren, um das Entnehmen der Pakete aus dem Laderaum passend zur jeweiligen Adresse zu ermöglichen.

Der Fahrer ist in der Lage, ohne umständliches Durchsuchen der Paketberge bzw. der Postsendungen die richtige Postsendung für die aktuelle Adresse bequem zu entnehmen.

Dazu kann das Fahrzeug von Anfang an in der richtigen Reihenfolge beladen werden. Es ist deshalb sinnvoll, auf Basis der einer Tour zugeordneten Pakete eine Tourplanung durchzuführen. Dabei können auch die zur Abholung identifizierten vorgemeldeten Abfallpakete einbezogen werden.

Auf Basis der geplanten Tour müssen sodann die Pakete beispielsweise per Förderband in der richtigen Reihenfolge an der bordsteinseitigen Schiebetür des Fahrerhauses angeliefert werden. Der Roboter 6 übernimmt die Pakete vom Förderband und stapelt sie in geeigneter, volumenoptimierter Weise im Frachtraum. Dabei ist die Trennwand 3 zu Beginn der Beladung weit nach vorne verschoben, um die erforderliche Reichweite des Roboters 6 klein zu halten. Mit zunehmender Anzahl der Pakete wird die Wand allmählich weiter nach hinten verschoben, bis alle Pakete an Bord sind.

Zur Ausführung des beschriebenen Verfahrens können unterschiedliche Softwaremodule vorgesehen sein. Diese Softwaremodule können dazu eingerichtet sein
- eine Tourplanungskomponente mit Schnittstelle zu einer Lagerhaus-IT bereitzustellen
- das volumenoptimierte Beladen des Fahrzeugs durch einen Roboter zu ermöglicht
- einer Fahrzeug-IT mitzuteilen, wo welches Paket im Fahrzeug liegt
- über GPS-Positionsdaten beim Aussteigen des Fahrers das richtig Paket an der Seitentür bereitzustellen
- an Positionen, an denen bereitgestellte Abfallpakete abgeholt werden sollen, die Einwurföffnung am Heck freizugeben, wenn der Fahrer aussteigt

Das Fahrzeug kann insgesamt voll elektrisch angetrieben sein. Das zulässige Gesamtgewicht kann 3,5t betragen, um keine erhöhten Anforderungen bezüglich des Führerscheins zu generieren. Die Reichweite im innerstädtischen Verkehr kann ca. 200 km betragen, die Leistung und das Drehmoment des Antriebs können so ausgelegt werden, dass eine Beschleunigung von 0 auf 100 km/h in weniger als 15 Sekunden möglich ist, die Endgeschwindigkeit soll auf 120 km/h limitiert sein. Unterhalb des Transportaufbaus ist eine Bodengruppe bestehend aus den Batteriemodulen denkbar. Diese Bodengruppe könnte in der Art eines Monocoque ausgeführt sein, um ein günstiges Volumen für die Batterien zu ermöglichen. Um möglichst wenig Platz zu verlieren, kann das Fahrzeug einen Vorderradantrieb und Einzelradaufhängung vorn und hinten aufweisen. Denkbar ist auch eine Ausführung mit zwei oder vier Radnabenmotoren.

Zur Beheizung des Fahrerhauses 5 kann ein Element vorgesehen sein, das Wärmestrahlung emittiert, was wesentlich effizienter ist als eine Luftheizung. Es können entsprechend eine Sitzheizung, eine Lenkradheizung, eine beheizbare Fußmatte und/oder ein Dachhimmel mit integrierter Flächenheizung vorgesehen sein. Zusätzlich kann eine beheizbare Frontscheibe vorgesehen sein.

Die Abfallmenge kann in vakuumierten Behältern transportiert bzw. bereitgestellt werden. Entsprechende Geräte zum Vakuumieren von Abfallmengen können an der Position der heutigen Mülltonnenstandplätze oder als Teil des Transportfahrzeugs vorgesehen sein.

Das Transportfahrzeug kann anstelle eines verdichtenden Ladewerks eine Zellenradschleuse zum Einbringen des Abfalls in den Vakuumbehälter aufweisen. Die notwendige Ladewanne kann mit einem Schredder ausgerüstet sein, wodurch hohe Füllgrade möglich sind.

Ein wesentlicher Vorteil ist dabei, dass die Energie, die für das Verdichten benötigt wird, nicht zwangsweise in einem zeitlichen Zusammenhang mit der Entleerung von Mülltonnen erzeugt werden muss, sondern der Behälter kann beispielsweise immer in den Fahrzyklen auf den notwendigen Unterdruck evakuiert werden, so dass insbesondere in Kombination mit einer elektrischen Schüttung mit sehr wenig Lärm an der Entleerstelle gearbeitet werden kann.

Die für den Haushalt vorgesehenen Verpackungen für die zu entsorgenden Abfallmenge können als Vakuumverpackungen ausgebildet sein. Sie können QR-Codes aufweisen, wobei jede einzelne Verpackung innerhalb eines Verkaufsgebindes von beispielsweise 10 Stück mit identischen QR-Codes angeordnet sein kann. Zusätzlich kann sich dieser QR-Code einmal im Inneren des Verkaufsgebindes befinden.

Der Kunde kann den QR-Code mittels einer App einmalig einscannen und stellt so eine Verknüpfung zwischen der konkreten 10er-Serie von QR-Codes und seinem zuvor eingerichteten Benutzerkonto her.

Besteht ein Abholbedarf, kann der Kunde die Abholung mittels Reware-Button anfordern und das evakuierte Paket bereitstellen. Am Fahrzeug kann der QR-Code erneut gescannt werden und damit bestätigt werden, dass das Paket tatsächlich abgeholt wurde.

Dem Kundenkonto kann der Kaufpreis für die Verpackung nach Art eines Pfandsystems gutgeschrieben werden, wobei zusätzlich ein Betrag pro Gewichtseinheit des entsorgten Abfalls berücksichtigt werden kann.

Um den Datenschutz zu gewährleisten, kann der QR-Code beim Einlegen in die Fahrzeugschleuse unbrauchbar gemacht werden, z.B. durch Übersprühen mit schwarzer Farbe oder einem Aufkleber. Anstelle des QR-Codes können auch andere Markeirungen wie beispielsweise NFC-Tags oder RFID-Tags vorgesehen sein.

QR-Codes haben den Vorteil, dass der gleiche Code erneut genutzt werden kann, wenn die 10er-Serie an Codes die komplette Kette durchlaufen hat. Dies ist bei elektronischen Tags schwieriger.

## Patentansprüche

1. Verfahren zum Identifizieren einer Abfallmenge mit wenigstens einem Marker, **gekennzeichnet durch** die Schritte:
- Bereitstellen einer Mehrzahl von identischen Markern mit damit verknüpften Informationen zur Benutzung durch einen Nutzer;
- Eingeben der Informationen in ein EDV-System durch den Nutzer, wobei die Eingabe für die Mehrzahl der Marker einmalig erfolgt;
- Markieren der Abfallmenge mit wenigstens einem der Marker durch den Nutzer; und
- Veranlassen einer Abholung der markierten Abfallmenge durch einen Abfallentsorger, wobei die Veranlassung durch den Nutzer erfolgt.

2. Verfahren nach Anspruch 1, **gekennzeichnet durch** wenigstens einen der Schritte:
- zweites Eingeben der Informationen in das EDV-System durch den Abfallentsorger;
- Veranlassen eines die Abfallmenge betreffenden Verwaltungsschrittes; und
- Wiederholen wenigstens eines der genannten Schritte nach Verbrauch eines oder einer Mehrzahl der Marker.

3. Verfahren nach Anspruch 1 oder 2, **dadurch gekennzeichnet, dass** die Marker jeweils an mit Abfall befüllbaren Vakuumverpackungen angebracht sind, welche mittels einer Vakuumiergeräts vakuumierbar sind, wobei das Markieren der Abfallmenge durch das Einfüllen der Abfallmenge in die entsprechend markierte Vakuumverpackung erfolgt.

4. Verfahren nach Anspruch 3, **dadurch gekennzeichnet, dass** die Vakuumverpackung innerhalb eines Gebindes mit einer Mehrzahl an Vakuumverpackungen vorgesehen ist und alle in dem Gebinde vorgesehenen Vakuumverpackungen Marker mit denselben Informationen umfassen.

5. Verfahren nach Anspruch 4, **dadurch gekennzeichnet, dass** eine Gebindeverpackung des Gebindes selbst einen Marker umfasst.

6. Verfahren nach einem der Ansprüche 3 bis 5, **dadurch gekennzeichnet, dass** der Marker je wenigstens einen QR-Code und/oder einen NFC-Tag und/oder einen RFID-Tag umfasst.

7. Verfahren nach einem der vorhergehenden Ansprüche, **dadurch gekennzeichnet, dass** die Abholung der markierten Abfallmenge mittels eines Transportfahrzeugs erfolgt, welches wenigstens zwei getrennte und miteinander gekoppelte Lagerkammern (1, 2) aufweist, wobei eine der Ladekammern (1) zum Lagern von Postsendungen und die andere Ladekammer (2) zum Lagern von Abfällen nutzbar ist, wobei die zwei Lagerkammern (1, 2) mittels einer gemeinsamen, verschieblichen Trennwand (3) voneinander getrennt sind.

8. Verfahren nach Anspruch 7, **dadurch gekennzeichnet, dass** das Transportfahrzeug eine Vakuumiervorrichtung zur Vakuumierung der markierten Vakuumverpackungen aufweist.

9. Verfahren nach einem der Ansprüche 7 oder 8 und nach Anspruch 3, **dadurch gekennzeichnet, dass** das Transportfahrzeug eine Einlesevorrichtung zum Einlesen der mit den Markern verknüpften Informationen aufweist.

## Claims

1. Method for the identifying of a quantity of refuse with at least one marker, **characterized by** the steps:
- providing a plurality of identical markers with information linked thereto for use by a user;
- entering the information into a computerized system by the user, wherein the entry for the plurality of markers occurs once;
- marking of the quantity of refuse with at least one of the markers by the user; and
- initiating a collection of the marked quantity of refuse by a refuse remover, wherein the initiation occurs through a user.

2. Method according to claim 1, **characterized by** at least one of the steps:
- a second inputting of the information into the computerized system by the refuse remover;
- initiating an administrative step concerning the quantity of refuse; and
- repeating at least one of the named steps after use of one or a plurality of the markers.

3. Method according to claim 1 or 2, **characterized in that** the markers are respectively applied to vacuum packagings able to be filled with refuse, which can be vacuumized by means of a vacuumizing device, wherein the marking of the quantity of refuse occurs by the filling the quantity of refuse into the correspondingly marked vacuum packaging.

4. Method according to claim 3, **characterized in that** the vacuum packaging is provided within a container with a plurality of vacuum packagings, and all vacuum packagings provided in the container include markers with the same information.

5. Method according to claim 4, **characterized in that** a container packaging of the container itself includes a marker.

6. Method according to any one of the claims 3 to 5, **characterized in that** the marker each includes at least one QR code and/or a NFC tag and/or a RFID tag.

7. Method according to any one of the preceding claims, **characterized in that** the retrieval of the marked quantity of refuse occurs by means of a transport vehicle, which has at least two storage chambers (1, 2), separate and coupled to one another, wherein one of the loading chambers (1) is usable for the storage of postal items, and the other loading chamber (2) is usable for the storage of refuse, wherein the two storage chambers (1, 2) are separated from one another by means of a common, displaceable separating wall (3).

8. Method according to claim 7, **characterized in that** the transport vehicle comprises a vacuumizing device for vacuumizing the marked vacuum packagings.

9. Method according to one of the claims 7 or 8 and according to claim 3, **characterized in that** the transport vehicle comprises a read-in device for reading-in the information linked to the markers.

## Revendications

1. Procédé pour identifier une quantité des déchets avec au moins un marqueur, **caractérisé par** les étapes de :
- fournir d'une multitude des marqueurs identiques ayant des informations liées à ceux-ci destinées pour l'utilisation par un utilisateur ;
- saisir des informations dans un système informatique par l'utilisateur, la saisi pour la multitude des marqueurs s'effectuant une fois ;
- marquage de la quantité des déchets avec au moins un des marqueurs par l'utilisateur ; et
- amener l'enlèvement de la quantité de déchets marquée par un traiteur des déchets, ledit aménage s'effectuant par l'utilisateur.

2. Procédé selon la revendication 1, **caractérisé par** au moins une des étapes de :
- deuxième saisi des informations dans le système informatique par le traiteur des déchets ;
- amener une étape de gestion concernant la quantité des déchets,
- répéter au moins une desdites étapes après la dépense d'un ou d'une multitude des marqueurs.

3. Procédé selon la revendication 1 ou 2, **caractérisé en ce que** les marqueurs sont respectivement attachés à des emballages sous-vide pouvant être remplies avec des déchets, qui peuvent être emballés sous-vide au moyen d'un appareil de mise sous-vide, le marquage de la quantité des déchets s'effectuant par le remplissage de la quantité des déchets dans l'emballage sous-vide respectivement maqué.

4. Procédé selon la revendication 3, **caractérisé en ce que** l'emballage sous-vide est prévu au sein d'un conteneur ayant une multitude des emballages sous-vide et que tous les emballages sous-vide prévus dans le conteneur comprend des marqueurs ayant des informations identiques.

5. Procédé selon la revendication 4, **caractérisé en ce qu'**un emballage-conteneur du conteneur comprend il-même un marqueur.

6. Procédé selon l'une quelconque des revendications 3 à 5, **caractérisé en ce que** le marqueur chacun comprend au moins un code QR et/ou une étiquette NFC et/ou une étiquette RFID.

7. Procédé selon l'une quelconque des revendications précédentes, **caractérisé en ce que** l'enlèvement de la quantité de déchets marquée s'effectue au moyen d'un véhicule de transport qui comprend au moins deux compartiments de stockage (1, 2) séparés et couplés l'un à l'autre, l'un des compartiments de stockage (1) étant utilisable pour stocker des envois postaux et l'autre compartiment de stockage (2) étant utilisable pour stocker des déchets, les deux compartiments de stockage (1, 2) étant séparés l'un de l'autre par une paroi de séparation (3) coulissante commune.

8. Procédé selon la revendication 7,
**caractérisé en ce que** le véhicule de transport présente un dispositif de mettre sous-vide pour mettre sous-vide les emballages sous-vide marqués.

9. Procédé selon l'une quelconque des revendications 7 ou 8 ou selon la revendication 3, **caractérisé en ce que** le véhicule de transport présente un dispositif lecteur pour la lecture des informations liées aux marqueurs.
